# EUROPÄISCHE PATENTANMELDUNG

(11) **EP 4 492 652 A1**
(43) Veröffentlichungstag der Anmeldung: **15.01.2025**
(21) Anmeldenummer: 24186235.8
(22) Anmeldetag: 03.07.2024
(51) Int. Cl.: H02K 15/02, H01F 41/02

(54) **VERBESSERUNGEN IM INLINE-VERARBEITUNGSPROZESS VON BESCHICHTETEM ELEKTROBLECH**

(30) Priorität: 12.07.2023 DE 102023118397
(71) Anmelder: ThyssenKrupp Steel Europe AG, 47166 Duisburg (DE)
(72) Erfinder: Lewe, Tobias, 47166 Duisburg (DE); Schreier, Dirk, 08315 Lauter-Bernsbach (DE)
(74) Vertreter: ThyssenKrupp Steel Europe AG

(57) **Zusammenfassung**

Die Erfindung betrifft ein Verfahren zum Herstellen eines Blechpakets, beispielsweise eines Stator-Pakets oder eines Rotor-Pakets. Das Verfahren weist die folgenden Schritte auf:
A) Bereitstellen eines Blechs (1) mit einer Klebstoffbeschichtung,
B) Transportieren des Blechs in eine Inline-Anlage, aufweisend: ein Schneidmittel (4), ein Abtrennmittel (6) sowie ein Aktivierungsmittel (5, 5a, 5b),
C) Schneiden eines Formteils (2) mit dem Schneidmittel (4),
D) Aktivieren der Klebstoffbeschichtung,
E) Abtrennen des Formteils (2),
F) Ablegen des Formteils (2),
G) Wiederholen der Schritte C) bis F), wobei die Klebstoffbeschichtung von einigen Formteilen (8) mittels einer Behandlungsvorrichtung (9) mit einem Behandlungsfluid versehen wird, um eine Sollbruchstelle zum Abtrennen eines Formteilstapels (3, 3) zu ermöglichen. In einigen Fällen kann mit einer Verdichterstation (7) nachverdichtet werden. Das Behandlungsfluid umfasst ein Stanzöl.

Die Erfindung betrifft außerdem ein Blechpaket und eine elektrische Maschine.

## Beschreibung

Die vorliegende Erfindung betrifft ein Verfahren zum Herstellen eines Blechpakets. Die Erfindung betrifft weiterhin einen Stapelabschnitt des Blechpakets und eine elektrische Maschine.

Die Funktionsweise von elektrischen Maschinen unterschiedlicher Weise, und im Besonderen von Elektromotoren, ist seit langem bekannt. Nicht zuletzt vor dem Hintergrund der zunehmenden Verwendung von Elektromotoren im individualisierten Personenkraftverkehr, oft auch unter dem Schlagwort der Elektromobilität angesprochen, gewinnt der Elektromotor weiter an Bedeutung. Wesentliche Bestandteile jedes Elektromotors sind ein Stator und ein Rotor, wobei der Begriff des Stators einen feststehenden Teil des Motors bezeichnet und der Begriff des Rotors einen sich bewegenden Teil des Motors bezeichnet.

Eine Herausforderung bei Bereitstellung von Elektromotoren ist, die Effizienz des Elektromotors, beispielsweise die bereitgestellte Leistung pro Volumen und/oder den Wirkungsgrad, im Rahmen eines wirtschaftlich sinnvollen Aufwands zu erhöhen.

Ein Konzept zur Bereitstellung von effizienten Elektromotoren ist die Herstellung von Statoren und/oder Rotoren oder von Teilen der Statoren und/oder Rotoren als sogenanntes Statorpaket beziehungsweise Rotorpaket. Andere herzustellende Bauteile sind Polkerne oder Segmente. Hierbei werden die genannten Bauteile als Blechpakete, auch als Lamellenpakete bezeichnet, aus einzelnen sogenannten Lamellen zusammengesetzt. Der Begriff der Lamelle bezeichnet ein Formteil, welches beispielsweise aus einem Elektroblech oder einem Elektroband ausgenommen wurde, beispielsweise mittels Stanzens. Die Lamellenpakete bestehen aus einer Vielzahl von dünnen Lamellen, die miteinander gestapelt und gegeneinander, bereichsweise oder bevorzugt vollständig, voneinander elektrisch isoliert sind. Für derartige Zwecke ist aus der Praxis beispielsweise die Nutzung sogenannter Elektroisolierlacke bekannt, die in sogenannte Isolierklassen eingeordnet sind.

Die Herstellung eines derartigen Blechpakets umfasst stets die Schritte der Herstellung von Lamellen sowie der Verbindung der Lamellen miteinander. Die Verbindung wird dabei bevorzugt in einer Weise vorgenommen, dass die Lamellen nach dem Verbinden abschnittsweise, bevorzugt vollständig, elektrisch voneinander isoliert sind, das heißt bevorzugt, dass zwei benachbarte Lamellen keine galvanische Verbindung zueinander haben.

Die Herstellung der einzelnen Lamellen kann beispielsweise durch Stanzen erfolgen. Das Verbinden der gestanzten Lamellen zu einem Blechpaket kann durch eine Vielzahl bekannter Verfahren erfolgen, beispielsweise durch Verschrauben, durch Anlegen von Klammern, durch Verschweißen oder durch Stanzpaketieren. Jedes dieser genannten, dem Fachmann geläufigen, Herstellverfahren geht jedoch aufgrund der während der Verbindungsherstellung erzeugten mechanischen Einwirkung mit nachteiligem Einfluss auf die nach dem Verbinden vorherrschenden elektromagnetischen Eigenschaften des fertiggestellten Blechpakets einher. Insbesondere können mechanische Spannungen, die bei einer nach dem Stand der Technik hergestellten Verbindung zwangsläufig zumindest in gewissem Maße unvermeidlich sind, sich nachteilig auf die magnetischen Eigenschaften und den Verlauf von Magnetfeldlinien innerhalb des Blechpakets auswirken, woraus sich beispielsweise unmittelbar ein nachteiliger Einfluss auf die Effizienz eines daraus hergestellten Elektromotors ergibt. Eine bei einigen Verbindungsverfahren, beispielsweise Stanzpaketieren oder Schweißen auftretende elektrische Verbindung zwischen zwei oder mehr Lamellen führt zu zusätzlichen Verlusten.

Eine elegante Möglichkeit, den nachteiligen Einfluss mechanischer Einwirkung auf die Lamellen zu verringern und gleichzeitig eine gute Isolation der Lamellen zueinander zu erreichen, ist der Einsatz von Klebstoffen als Verbindungsmittel. Geeignete Klebstoffsysteme haben oft auch isolierende Eigenschaften analog zu Elektroisolierlacken.

Eine dem Fachmann bekannte Vorgehensweise hierfür ist der Einsatz sogenannter Backlacke. Der Einsatz von Backlacken zum Verkleben von gestanzten Elektroblechen wird beispielsweise in der DE 38 29 068 C1 beschrieben. Eine Vorgehensweise zum Einsatz von Backlack ist das Beschichten eines Blechs, insbesondere eines Blechbands, das nachfolgende Herausstanzen einzelner Lamellen aus dem Blech, das zueinander ausgerichtete Positionieren der einzelnen Lamellen zueinander und das nachfolgende Wärmebehandeln des sich ergebenden Blechstapels während eines definierten Zeitraums und bei einer definierten Temperatur. In vielen Fällen werden die Lamellen während der Wärmebehandlung gegeneinander verpresst, zum Beispiel durch eine stirnseitige Kraftbeaufschlagung, bevorzugt mit gleichmäßiger Flächenkraft, in eine axiale Richtung des Blechpakets, die in das Blechpaketinnere hineinweist. Typische Reaktionstemperaturen sind 150 °C bis 250 °C, eine typische Zeitdauer für ein Reagieren der Backlacke sind 30 bis 150 Minuten mit einer anschließenden Abkühlphase, wobei die genauen Parameter selbstverständlich von dem konkret verwendeten Backlack und der konkret vorliegenden Geometrie abhängt, da beispielsweise eine sich in dem Bauteil einstellende Kerntemperatur Einfluss auf den Verlauf des Backlackverfahrens hat. Mit dieser Vorgehensweise können im Allgemeinen hervorragende elektromagnetische Eigenschaften von Statorpaketen und/oder Rotorpaketen erreicht werden. Aufgrund der zeitaufwändigen Verfahrensweise ist jedoch unmittelbar ersichtlich, dass der Einsatz von Backlacken für eine kontinuierliche Massenproduktion nicht oder zumindest nicht optimal geeignet ist. Eine Lösung zum Verkleben von Elektroblechen in einer kontinuierlichen Massenproduktion wird in der DE 10 2020 109 985 A1 aufgezeigt. Hierbei werden klebstoffbeschichtete Bleche zur Verfügung gestellt und anschließend in einer Inline-Anlage zu einem Blechpaket weitverarbeitet. Dazu wird ein Formteil aus dem Blech geschnitten, anschließend die Klebstoffbeschichtung aktiviert, dann das Formteil vom Blech abgetrennt und abgelegt. Der Vorgang wird entsprechend wiederholt, wobei nach einer vorgegebenen Anzahl an Formteilen ein Behandlungsfluid aufgebracht wird, um eine verbesserte Trennbarkeit zu erreichen. Bei dem Behandlungsfluid kann es sich um ein Stanzöl handeln. Es hat sich nun gezeigt, dass das Verfahren des Aufbringens eines Behandlungsfluids für die weiteren Prozessschritte eine entscheidende Rolle spielt.

Aufgabe der Erfindung ist es, ein Verfahren zur Herstellung eines Blechpakets, also insbesondere Stator- oder Rotorpaketen, zur Verfügung zu stellen, bei dem eine optimale Pakettrennung von Stapelabschnitten möglich ist. Insbesondere soll eine physikalische und/oder chemische Kontamination der Werkzeuge der In-line Anlage und des noch zu bearbeitenden klebstoffbeschichteten Blechs durch sich ablösende Klebstoffbeschichtung oder Behandlungsfluid vermieden oder minimiert werden. Dadurch soll eine Unterbrechung des In-line Prozesses und/oder Taktverlangsamung vermieden werden.

Die Aufgabe wird gelöst mit einem Verfahren nach Anspruch 1.

Das erfindungsgemäße Verfahren zum Herstellen eines Blechpakets für eine elektrische Maschine weist zumindest die folgenden Schritte auf:
A) Bereitstellen eines mit einer zumindest teilweise aushärtbaren polymeren Klebstoffbeschichtung versehenen Blechs oder mehrerer mit einer zumindest teilweise aushärtbaren polymeren Klebstoffbeschichtung versehener Bleche;
B) Transportieren des Blechs in eine Inline-Anlage, aufweisend: wenigstens ein Schneidmittel, ein Abtrennmittel sowie ein, bevorzugt zwischen dem wenigstens einen Schneidmittel und dem Abtrennmittel angeordnetes, Aktivierungsmittel zum Aktivieren der Klebstoffbeschichtung;
C) Schneiden eines, bevorzugt als Statorlamelle oder als Rotorlamelle ausgebildeten, Formteils aus dem in Schritt A) bereitgestellten Blech mit dem wenigstens einen Schneidmittel;
D) Aktivieren der Klebstoffbeschichtung des Formteils, bevorzugt des in Schritt C) ausgebildeten Formteils, mittels des Aktivierungsmittels zum Aktivieren der Klebstoffbeschichtung des Formteils;
E) Abtrennen des Formteils von dem Blech mit dem Abtrennmittel;
F) Ablegen des Formteils in einem Positionierbereich zur Bildung eines Formteilstapels;
G) Wiederholen der Schritte C) bis F) zum kontinuierlichen Füllen des Positionierbereichs mit Formteilen, wobei nach einer vorgegebenen erreichten Anzahl von Formteilen bei dem nachfolgenden Formteil vor Durchführen des Schritts F) mittels einer Behandlungsvorrichtung das nachfolgende Formteil wenigstens bereichsweise mit einem Behandlungsfluid versehen wird für eine Wirkverringerung der Klebstoffbeschichtung dieses nachfolgenden Formteils, so dass die Klebstoffbeschichtung dieses nachfolgenden Formteils in dem Positionierbereich infolge der wirkverringerten Klebstoffbeschichtung eine verbesserte Trennbarkeit eines Stapelabschnitts unterhalb der wirkverringerten Klebstoffbeschichtung von einem Stapelabschnitt oberhalb der wirkverringerten Klebstoffbeschichtung bewirkt, wobei das Behandlungsfluid ein Stanzöl umfasst, welches mit einem Öl-Injektor aufgebracht wird.

Gemäß Schritt A) wird ein Blech bereitgestellt, das mit einer zumindest teilweise aushärtbaren polymeren Klebstoffbeschichtung versehen ist. Das bedeutet, dass das Blech eine Klebstoffbeschichtung aufweist, die nach einer, beispielsweise thermisch ausgelösten, Aktivierung aushärtet und dadurch ihre Klebeigenschaften entfaltet. Bevorzugt ist das Blech vollflächig mit der Klebstoffbeschichtung beschichtet, entweder einseitig oder, besonders bevorzugt, beidseitig. Bei dem Blech kann es sich beispielsweise um ein Elektroband handeln oder um eine aus einem Blechband abgetrennte Platine.

Gemäß Schritt B) wird das Blech in eine Inline-Anlage hineintransportiert. Die Inline-Anlage weist zumindest auf: ein Schneidmittel, ein Abtrennmittel sowie ein Aktivierungsmittel zum Aktivieren der Klebstoffbeschichtung. Das Aktivierungsmittel ist bevorzugt zwischen dem Schneidmittel und dem Abtrennmittel angeordnet.

Der Begriff der Inline-Anlage bezieht sich darauf, dass eine Anzahl von Bearbeitungsstationen, nämlich wenigstens die oben genannten, in einer vorgegebenen Reihenfolge angeordnet sind, und in die Inline-Anlage hineingeführtes Blech, beispielsweise Elektroband, automatisiert und sequenziell an den vorgegebenen Stationen bearbeitet werden.

Das Schneidmittel dient dem Bilden von Strukturen der herzustellenden Lamelle. Dies kann beispielsweise mehrschrittig mit einem Schneidmittel oder mehrschrittig mit unterschiedlichen Schneidmitteln erfolgen, wobei in beiden Fällen bevorzugt eine mehrschrittige Strukturbildung bei einer Lamelle vom Inneren hin zum Äußeren erfolgt, das heißt, eine Anzahl von mehreren erforderlichen Schneidvorgängen wird bevorzugt derart vorgesehen, dass die Schneidvorgänge zuerst die in einer Lamelle innerste Strukturen bilden und sodann Schneidvorgänge schrittweise zum Lamellenäußeren hin erfolgen.

Das Schneidmittel kann beispielsweise als Stanzstempel ausgebildet sein. Das Schneiden des Schritts C) ist in diesem Fall ein Stanzen.

Das Schneidmittel kann auch als Laser ausgebildet sein. Das Schneiden des Schritts C) ist dann ein Laserstrahlschneiden.

Die Inline-Anlage kann auch eine Sequenz aus mehreren Schneidmitteln aufweisen, beispielsweise ausgebildet als Stanzwerkzeug mit mehreren sequenziell angeordneten Stanzstufen oder als Folge eines Stanzwerkzeugs und eines Lasers. Das wenigstens eine Schneidmittel kann als Folgeverbundwerkzeug ausgebildet sein, mit welchem die vorgegebene Geometrie der Lamelle in das Elektroband gestanzt wird, bevorzugt vom Lamelleninneren hin zum Lamellenäußeren.

Der Begriff der Lamelle bezeichnet in dem obigen Kontext ein durch Heraustrennen aus dem Blech gewonnenes Formteil, insbesondere ein durch Ausstanzen gewonnenes Formteil.

Das Aktivierungsmittel zum Aktivieren der Klebstoffbeschichtung ist in der Lage, einen Wärmeeintrag in die Klebstoffbeschichtung einzubringen, wobei die Erzeugung des Wärmeeintrags grundsätzlich auf beliebige Weise vorgenommen werden kann. Insbesondere kann das Aktivierungsmittel ein Mittel zur Ausgabe von Infrarotstrahlung aufweisen, beispielsweise einen NIR-Emitter, also ein Leuchtmittel, das zur Ausgabe von elektromagnetischer Strahlung im NIR-Wellenlängenspektrum, also mit Wellenlängen zwischen 400 nm und 10 µm, bevorzugt zwischen 780 nm bis 3 µm, ausgebildet ist.

In einer Alternative ist das Aktivierungsmittel ein Laser zur Ausgabe von elektromagnetischer kohärenter Strahlung im Wellenlängenspektrum, mit Wellenlängen zwischen 200 nm und 12 µm. Dadurch ist eine genaue zielgerichtete Bestrahlung möglich und erhöht so den Wirkungsgrad.

Alternativ oder zusätzlich kann das Aktivierungsmittel eine Induktive Erwärmung, insbesondere Induktionsspulen, zum Erwärmen der Klebstoffbeschichtung aufweisen.

Weiterhin weist die Inline-Anlage, wie erwähnt, ein Abtrennmittel auf. Dieses Abtrennmittel ist bevorzugt als Ausschneidstempel ausgebildet, welcher durch zur Blechoberfläche senkrechte Kraftauswirkung die n Lamellen sequenziell durch Trennen von dem das Lamellenäußere begrenzende Blech trennt und bevorzugt im selben Prozessschritt die Lamelle in eine unterhalb des Blechs angeordnete Aufnahmevorrichtung befördert, in welcher die Lamellen gesammelt werden. Bevorzugt stanzt der Ausschneidstempel die Lamelle in ihrer äußeren Begrenzung aus dem Blech aus. Besonders bevorzugt sind Schneidmittel und Abtrennmittel Bestandteil einer selben Presse mit dem Vorteil, dass eine hohe Synchronisierung der Stanz- und Auspressvorgänge vorliegt.

In einer besonderen Ausführungsform ist der Ausschneidstempel mit einer Antihaftbeschichtung beschichtet.

Gemäß Schritt C) wird mit dem Schneidmittel ein Formteil aus dem in Schritt A) bereitgestellten Blech ausgestanzt, beispielsweise eine Rotorlamelle oder eine Statorlamelle. Innerhalb der Inline-Anlage findet ein Schneiden einer elektrischen Komponente, insbesondere eines als Statorlamelle oder als Rotorlamelle ausgebildeten Formteils aus dem in Schritt A) bereitgestellten Blech mit dem Schneidmittel statt, wobei bevorzugt die Außenkonturen noch nicht gebildet werden, sondern die Außenkonturen erst in Schritt E) gebildet werden.

Schritt D) umfasst das Aktivieren der Klebstoffbeschichtung, bevorzugt vollflächiges Aktivieren der Klebstoffbeschichtung, mittels des Aktivierungsmittels zum Aktivieren der Klebstoffbeschichtung des Formteils. Bevorzugt erfolgt das Aktivieren des in Schritt C) gebildeten Formteils, das heißt, das Aktivieren erfolgt nach dem Schneiden des Schritts C). Durch den Wärmeeintrag wird die Klebstoffbeschichtung aktiviert und das ausgestanzte Formteil ist in der Lage, eine Klebverbindung, also eine Vorfixierung, einzugehen. Der Begriff der Vorfixierung bezieht sich darauf, dass das Formteil für die weitere Bearbeitung ausreichend belastbar ist, jedoch noch keine für die industrielle Verwendung des fertigen Blechpakets ausreichende Fixierung vorliegt. Die Klebstoffverbindung ist wenigstens zum Teil chemisch ausgehärtet und kann im späteren Prozess durch Nachverdichtung unter Druck und/oder Temperatur in ihrer Endfestigkeit erhöht werden.

In einer speziellen Ausführungsform kann vorgesehen sein, dass die Aktivierungstemperatur in der Inline-Anlage zwischen 30 °C und 180 °C, bevorzugt zwischen 40 °C und 120 °C, besonders bevorzugt zwischen 50 °C und 100 °C beträgt.

Schritt E) umfasst das Abtrennen des Formteils mit dem Abtrennmittel und, als Schritt F), ein Ablegen, bevorzugt ein über die Außengeometrie geführtes Ablegen, des Formteils in einem Positionierbereich zur Bildung eines Formteilstapels. Der Positionierbereich dient dem positions- und/oder winkelausgerichteten Positionieren des Formteils auf andere Formteile, die bereits im Positionierbereich vorhanden sind. Dadurch wird, Formteil für Formteil sequenziell zunehmend, schließlich ein Stapel von gegeneinander ausgerichteten und mit aktiviertem Klebstoff versehenen Formteilen erhalten. Das bevorzugt als Ausstanzen ausgeführte Abtrennen der Lamelle aus dem Blech mit dem Schneidmittel erfolgt bevorzugt im Rahmen eines selben Prozessschritts mit dem Ablegen des Formteils in dem Positionierbereich, das heißt, das Abtrennen des Schritts E) und das bevorzugte Verkleben der Lamelle mit der jeweils vorherigen Lamelle umfassende Ablegen des Schritts F) erfolgen bevorzugt in einem selben Prozessschritt und unter Führung und gegebenenfalls Druckausübung durch das Abtrennmittel auf den sich bildenden Formteilstapel. Bei der bevorzugten Verwendung eines Ausschneidstempels als Abtrennmittel kann dieser in einer besonderen Ausführungsform mit einer Antihaftbeschichtung versehen sein. Dadurch kann die Lamelle nicht an dem Auspressstempel festhaften. Ferner verhindert die Antihaftbeschichtung auf der Innenseite des Auspressstempels Klebstoffanbackungen und/oder eine physikalische und/oder chemische Kontamination der Werkzeuge der Inline-Anlage und des noch zu bearbeitenden klebstoffbeschichteten Blechs. Solche Störungen des kontinuierlichen Prozesses würden zu dessen Unterbrechung oder Verlangsamung führen.

Der Positionierbereich kann beispielsweise ein an die Außengeometrie des Formteils angepasstes zylindrisches Rohr sein, beispielsweise bei in einen Kreis eingeschriebenen Formteilen ein kreiszylindrisches Rohr, welches unterhalb der Beförderungsebene des Formteils liegt. Das Ausrichten des Formteils erfolgt durch den Positionierbereich, beispielsweise ausgebildet als zylindrisches Hohlrohr mit einem Mantelquerschnitt, der im Wesentlichen dem Querschnitt der Formteile entspricht und mit diesem in vorgesehener Positionierung ausgerichtet ist. Der Positionierbereich kann auch einem Abbild der Lamelle entsprechen und somit vollflächig im Kontakt mit dem Positionierbereich stehen.

Gemäß Schritt G) werden die Schritte C) bis F) wiederholt, wobei der Formteilstapel kontinuierlich gestapelt wird, das heißt kontinuierlich Formteile in den Positionierbereich positioniert werden. Bevorzugt erfolgt dies derart, dass der Positionierbereich kontinuierlich vollständig aufgefüllt ist.

Der gesamte Prozess kann auch mehrreihig sein, das heißt es werden parallel und/oder hintereinander zwei oder mehr als zwei Lamellen aus einem Elektroband (je nach Anzahl, Geometrie und Anordnung diagonal versetzt oder gedreht zueinander) ausgestanzt.

Bei einer vorgegebenen erreichten Anzahl von Formteilen wird das dann nächste Formteil mittels einer Behandlungsvorrichtung wenigstens bereichsweise mit einem Behandlungsfluid versehen, so dass die Wirkung der Klebstoffbeschichtung, also die Klebkraft, verringert wird, das heißt, sie weist weniger oder keine Klebkraft mehr auf, so dass die Klebstoffbeschichtung an dieser Position eine verbesserte Trennbarkeit eines Stapelabschnitts unterhalb der wirkverringerten Klebstoffbeschichtung von einem Stapelabschnitt oberhalb der wirkverringerten Klebstoffbeschichtung bewirkt. Die Trennbarkeit liegt an der Klebstoffbeschichtung vor, so dass die Trennbarkeit mit der Klebstoffbeschichtung als Sollbruchstelle bereitgestellt ist.

Mit anderen Worten: Bei kontinuierlicher Wiederholung der Schritte D) bis F) wird bei ausgewählten Formteilen mittels einer Behandlungsvorrichtung wenigstens bereichsweise ein Behandlungsfluid aufgetragen, so dass die Wirkung der Klebstoffbeschichtung, also die Klebkraft, verringert wird und eine vereinfachte Trennbarkeit eines Stapelabschnitts unterhalb der wirkverringerten Klebstoffbeschichtung von einem Stapelabschnitt oberhalb der wirkverringerten Klebstoffbeschichtung vorliegt. Die Formteile werden derart als ausgewählte Formteile ausgewählt, dass der jeweils sich ergebende Stapelabschnitt mit einer gewünschten Formteilanzahl und damit einer gewünschten Formteilhöhe während kontinuierlicher Fortführung des Prozesses aus der Positioniervorrichtung, unterhalb der Aufnahmeseite der Positioniervorrichtung, abgetrennt werden kann und damit als Blechpaket bereitgestellt ist.

Es wird also kontinuierlich ein Formteilstapel gebildet, der in Stapelabschnitte unterteilt ist, wobei kontinuierlich jeweils ein Stapelabschnitt als Blechpaket von dem Formteilstapel getrennt wird.

Beispielsweise kann vorgesehen sein, dass mit jedem Formteil, das an der Oberseite des Positionierbereichs auf den Formteilstapel abgelegt wird, an der Unterseite ein Hinausbewegen um die Dicke eines Formteils erfolgt und dass, sobald ein vollständiger Stapelabschnitt an der Unterseite ausgegeben ist, dieser abgetrennt wird und sodann als Blechpaket bereitsteht, während an der Oberseite kontinuierlich weiter aufgefüllt wird.

Neben dem Einsatz eines Behandlungsfluids kann auch zusätzlich die Erwärmung, also das Aktivierungsmittel, im Bereich, in dem das Behandlungsfluid aufgebracht wird, deaktiviert werden.

Das wenigstens bereichsweise Versehen des Formteils mit dem Behandlungsfluid erfolgt vor Schritt F) aber bevorzugt vor Schritt E), außerdem bevorzugt nach Schritt C), besonders bevorzugt nach Schritt D), also besonders bevorzugt als zusätzlicher Schritt zwischen Schritt D) und Schritt E).

Bevorzugt wird das Formteil auf einer seiner Flächen vollflächig mit dem Behandlungsfluid versehen, alternativ wird das Formteil auf beiden seiner Flächen vollflächig mit dem Behandlungsfluid versehen.

Eine Variante sieht vor, dass das Formteil auf einer seiner Flächen mit dem Behandlungsfluid versehen wird, nämlich mit der dem Abtrennmittel gegenüberliegenden Fläche. Dies geht mit dem Vorteil einher, dass eine unbeabsichtigte Weitergabe von dem Behandlungsfluid über das Abtrennmittel auf ein nachfolgendes Formteil vermieden wird.

Die vorgegebene erreichte Anzahl ist dahingehend zu verstehen, dass auch mehrere vorgegebene Anzahlen vorgegeben sein können, nach deren Erreichen eine Wirkverringerung herbeigeführt wird, so dass also bis zum Erreichen der gewünschten Anzahl von Formteilen je nach Vorgabe beziehungsweise Vorgaben auch mehr als einmal das Erreichen der Wirkverringerung herbeigeführt ist. Es liegt dann ein Formteilstapel vor, der wenigstens eine Sollbruchstelle aufweist, oder in einem Fall in welchem mehrere vorgegebene Anzahlen vorgegeben waren: mehrere Sollbruchstellen aufweist. An der Sollbruchstelle beziehungsweise den Sollbruchstellen kann der Formteilstapel in zwei oder mehr Stapelabschnitte geteilt werden, was bevorzugt kontinuierlich während des laufenden Prozesses erfolgt. Wie viele Sollbruchstellen der Formteilstapel vor Abtrennen eines Blechpakets aufweist, hängt alleine von der Höhe der Stapelabschnitte und von der Höhe des Positionierbereichs ab.

Die Behandlungsvorrichtung ist bevorzugt hinter dem Aktivierungsmittel angeordnet, das heißt derart angeordnet, dass ein Formteil erst das Aktivierungsmittel durchfährt und sodann die Behandlung der Klebstoffbeschichtung erfolgt.

Alternativ ist die Behandlungsvorrichtung hinter dem Schneidmittel, aber vor dem Aktivierungsmittel angeordnet.

Mit anderen Worten: Es wird in den Positionierbereich hinein ein Formteilstapel bis zu einer vorgesehenen Gesamthöhe gebildet, wobei der Formteilstapel bei Erreichen der Gesamthöhe als Blechpaket bereitsteht, das heißt mit der gewünschten Anzahl von Formteilen, das eine Anzahl von einer Sollbruchstelle oder mehreren Sollbruchstellen aufweist. Eine solche Sollbruchstelle ist dadurch charakterisiert, dass die Haftung von zwei benachbarten Formteilen geringer ist als die Haftung von zwei benachbarten Formteilen außerhalb einer Sollbruchstelle. Die Sollbruchstellen werden in der oben beschriebenen Weise dadurch gebildet, dass nach einer vorgegebenen Anzahl von Formteilen der Klebstoff in seiner Wirkung, also seiner möglichen Haftkraft, herabgesetzt wird. Dies kann bei Bildung eines Formteilstapels in dem Positionierbereich auch mehrmals wiederholt werden. Beispielsweise kann ein eine gewünschte Anzahl N Formteile aufweisender, Formteilstapel nach jeweils N/n erreichten Formteilen eine Sollbruchstelle aufweisen, wodurch bewirkt wird, dass die Klebstoffbeschichtung bei jedem N/n-ten Formteil wirkverringert ist mit der Folge, dass der Formteilstapel (n-1) Sollbruchstellen aufweist und in n kleinere Stapelabschnitte geteilt werden kann. Dabei ist N eine durch die ganze Zahl n ganzzahlig teilbare ganze Zahl.

Es kann, wie im obigen Beispiel, vorgesehen sein, dass bis zum Erreichen der gewünschten Anzahl von Formteilen alle jeweils nachfolgenden vorgegebenen erreichten Anzahlen von Formteilen einen gleichen Abstand aufweisen, so dass die gewünschte Anzahl von Formteilen ein Blechpaket bildet, das äquidistant verteilte Sollbruchstellen aufweist, an denen jeweils dann gleich hohe Stapelabschnitte abgetrennt werden können.

Es kann alternativ vorgesehen sein, dass bis zum Erreichen der gewünschten Anzahl von Formteilen jeweils nachfolgende vorgegebene erreichte Anzahlen von Formteilen je nach Bedarf voneinander beabstandet sind, so dass die gewünschte Anzahl von Formteilen ein Blechpaket bildet, das Sollbruchstellen aufweist, mit denen Stapelabschnitte voneinander getrennt werden, die unterschiedliche Höhen aufweisen.

Aus einem Formteilstapel werden die Stapelabschnitte separat entnommen, wobei je nach noch vorhandener Klebkraft zwischen zwei Stapelabschnitten ein Trennen der Stapelabschnitte an den als Sollbruchstellen wirkenden wirkverringerten Klebstoffbeschichtungen erfolgt, beispielsweise manuell. Die einzelnen Stapelabschnitte stehen dann als fertiggestelltes Blechpaket, beispielsweise als fertiggestellter Stator, als fertiggestellter Rotor oder als fertiggestelltes Segment eines Stators beziehungsweise Rotors, bereit.

Eine spezielle Ausführungsform mit vollflächig verklebten Blechlamellen hat den Vorteil, dass dichte Kühlkanäle integriert werden können. Dies ist insbesondere vorteilhaft, wenn in mehreren elektrischen Komponenten (z. B. Rotor und Stator) unterschiedliche oder sogar unverträgliche Kühlmedien eingesetzt werden. Die Kühlkanäle können in die Lamelle eingestanzt oder zwischen Blechpaket und angrenzendem Bauteil, beispielsweise Welle oder Gehäuse, vorgesehen sein.

Es wird darauf hingewiesen, dass ein Stator und ggf. auch ein Rotor auch aus mehreren Segmenten zusammengesetzt sein kann.

Schritt G) sieht also vor, dass eine Sollbruchstelle oder mehrere Sollbruchstellen in dem den gesamten Positionierbereich ausfüllenden Formteilstapel bewirkt werden, wobei die Sollbruchstelle beziehungsweise die Sollbruchstellen dadurch hergestellt werden, indem ein an der Sollbruchstelle befindliches Formteil während des Durchlaufens der Schritte C) bis F) einem zusätzlichen Schritt unterzogen wird. Der zusätzliche Schritt besteht darin, dass das an der Sollbruchstelle befindliche Formteil wenigstens bereichsweise, bevorzugt vollflächig, mit einem Behandlungsfluid versehen wird für eine Wirkverringerung der Klebstoffbeschichtung dieses Formteils.

Das mit dem Behandlungsfluid beschichtete Formteil kann in einer Variante an nur einer Oberfläche mit dem Behandlungsfluid versehen werden. Diese Oberfläche liegt sodann an der Sollbruchfläche des Formteils.

Das mit dem Behandlungsfluid beschichtete Formteil kann in einer alternativen Variante an beiden Oberflächen mit dem Behandlungsfluid versehen werden. Das Formteil liegt sodann an zwei Sollbruchflächen, das Formteil dient als Opferlamelle, die nicht Bestandteil eines Stapelabschnitts ist.

Der Begriff des Blechs bezeichnet allgemein ein Walzwerkerzeugnis aus einem metallischen Material, und kann neben einem Feinblech oder einem Grobblech insbesondere auch ein Metallband, ein Metallband oder Metallblech aus einem weichmagnetischen Werkstoff, ein Stahlband oder ein Elektroband bezeichnen. Andere Herstellungsverfahren des Bleches können optional eingesetzt werden.

Das Blechpaket ist bevorzugt entweder ein Stator-Paket oder ein Rotor-Paket. Das Blechpaket besteht neben dem Klebstoff aus sogenannten Lamellen, weswegen es auch als Lamellenpaket bezeichnet werden könnte.

Gemäß einer vorteilhaften Weiterbildung des eingangs beschriebenen Verfahrens weist das Aktivierungsmittel ein erstes Infrarotleuchtmittel auf. Mit dem ersten Infrarotleuchtmittel wird die Klebstoffbeschichtung mit Infrarotstrahlung beleuchtet und durch den herbeigeführten Wärmeeintrag aktiviert.

Mit anderen Worten wird eine zur Aktivierung ausreichende Temperatur in dem Blech und insbesondere dem Klebstoff herbeigeführt, beispielsweise durch Beleuchten für einen Zeitraum von zwischen 0,05 und 1 Sekunde bei einer zum Erreichen der Aktivierungstemperatur erforderlichen Emissionsleistung, die ihrerseits selbstverständlich von der genauen Auswahl des Klebstoffs und der Beschaffenheit, insbesondere der Oberfläche und des Materials, des Formteils abhängt und für den mit der Umsetzung der Erfindung betrauten Fachmann problemlos zu ermitteln ist.

Besonders bevorzugt ist das Aktivierungsmittel beziehungsweise sind die Aktivierungsmittel zwischen Schneidmittel und Abtrennmittel angeordnet und weist beziehungsweise weisen mindestens ein oberes Infrarotleuchtmittel auf, das in eine Stanzrichtung auf die erste Blechoberfläche gerichtet ist. Alternativ weist das Aktivierungsmittel mindestens ein unteres Infrarotleuchtmittel auf, das sich jenseits der Seite des Blechs befindet, auf welcher das Schneidmittel sich befindet und gegen eine Stanzrichtung gerichtet ist. Alternativ können sowohl mindestens ein oberes als auch mindestens ein unteres Infrarotleuchtmittel vorgesehen sein. Die Ausrichtung des Infrarotleuchtmittels beziehungsweise der Infrarotleuchtmittel auf die Lamellenoberfläche muss nicht zwingend rechtwinklig erfolgen, sondern kann auch in einem anderen Winkel, vorgenommen sein.

Insbesondere in einem Fall, in welchem sowohl ein oberes als auch ein unteres Infrarotleuchtmittel vorhanden ist, ist bei einer Nutzung von beidseitig mit einer Klebstoffbeschichtung versehenem Blech in besonders geeigneter Weise eine Aktivierung von Klebstoff sowohl auf einer ersten als auf der gegenüberliegenden zweiten Blechseite möglich mit dem vorteilhaften Ergebnis, dass eine hervorragende Haftung der Bleche miteinander zu erwarten ist.

Gemäß einer Weiterbildung weist das Aktivierungsmittel ein zweites Infrarotleuchtmittel auf. Das erste Infrarotleuchtmittel und das zweite Infrarotleuchtmittel strahlen Infrarotstrahlung unterschiedlicher Wellenlänge aus, zur Aktivierung der Klebstoffbeschichtung mit unterschiedlicher Aktivierungstiefe. Beispielsweise kann vorgesehen sein, dass das erste Infrarotleuchtmittel Infrarotstrahlung mit einer Wellenlänge zwischen 780 nm und 1200 nm aufweist und/oder das zweite Infrarotleuchtmittel Infrarotstrahlung mit einer Wellenlänge zwischen 1200 nm und 3000 nm. Mit einer derartigen Anordnung kann aufgrund der wellenlängenabhängig unterschiedlichen Eindringtiefe eine gleichmäßigere und insbesondere hinsichtlich der Tiefe durchgängigere Aktivierung der Klebstoffbeschichtung herbeigeführt werden. Mit dieser gehen die Vorteile einer besonders guten Haftung und/oder einer besonders guten Kraftaufnahmefähigkeit einher.

Eine solche Anordnung kann auch als Doppelaktivierung bezeichnet werden. Diese kann wiederum ein- oder beidseitig ausgeführt werden.

Alternativ oder zusätzlich kann das Aktivierungsmittel Induktionsheizer aufweisen mit dem Vorteil, dass bei induktiver Erwärmung des Blechs der Klebstoff von der Haftfläche des Blechs mit der Klebstoffbeschichtung ausgehend aktiviert wird, so dass eine gute Aktivierung und anschließende Haftung des Klebstoffs erreicht wird.

In einer speziellen Weiterbildung wird das Band vor dem Einlaufen zu den Schneidmitteln vorgewärmt, beispielsweise mittels induktiver Erwärmung. Dies hat den Vorteil, dass die Aktivierung innerhalb der Presse mit einer geringeren Wärmemenge auskommt oder die insgesamt eingebrachte Wärmemenge erhöht wird und so die Verklebung höheren Anforderungen, beispielsweise hinsichtlich der mechanischen Eigenschaften, genügt.

Vorteil des Vorwärmens ist weiterhin eine Reduzierung der Pressenkraft mit den bekannten Vorteilen und einer geringeren Umformleistung mit einer geringeren Einbringung von Eigenspannungen. Dieser Effekt ist besonders gut erreichbar, wenn zusätzlich dem Fachmann geläufige weitere optionale Anpassungen an den Schneidwerkzeugen durchgeführt werden.

In einer weiteren Weiterbildung erfolgen einige oder mehrere, bevorzugt alle, der Schritte B) bis E) innerhalb einer Einhausung der Inline-Anlage, um die eingebrachte Wärme weitestgehend im Gesamtsystem zu halten, mit dem Vorteil einer höheren Energieeffizienz des Gesamtverfahrens.

Weiterhein können die Inline-Anlage, abschnittsweise oder vollständig, Bandeinlauf und Nachverdichterstation, aktiv erwärmt werden. Hierzu wird die üblicherweise eingesetzte Ölheizung von Pressenständer und Werkzeugaufnahme um eine Erwärmung des Werkzeuges, der Nachverdichterstation und/oder des Innenraums, beispielsweise mittels Gebläse mit elektrischer Heizpatrone, bevorzugt im Gegenstrom, erweitert.

In einer speziellen Ausführungsform kann vorgesehen sein, dass die Aktivierungstemperatur in der Inline-Anlage zwischen 30 °C und 180 °C, bevorzugt zwischen 40 °C und 120 °C, besonders bevorzugt zwischen 50 °C und 100 °C beträgt, und dass in der Nachverdichterstation eine Nachverdichtung bei einer Temperatur durchgeführt wird, die größer ist als die Aktivierungstemperatur. Es sind in Weiterbildungen Varianten vorgesehen, gemäß denen die Behandlungsvorrichtung eine Beschichtungseinheit aufweist, mit der als Behandlung der Klebstoffbeschichtung das Formteil wenigstens bereichsweise mit einem Behandlungsfluid beschichtet wird, das auf die Klebstoffbeschichtung aufgetragen wird. Das Behandlungsfluid dient dazu, die Wirkung des Klebstoffs bei einem jeweils hierfür ausgewählten Formteil, nach einer vorgegebenen erreichten Anzahl von Formteilen, herabzusetzen, so dass der sich ergebende Formteilstapel an dieser Stelle eine Art Sollbruchstelle aufweist, die zwei aufeinander angeordnete Stapelabschnitte voneinander trennt. Die Beschichtungseinheit ist ein Öl-Injektor. Mit dem Öl-Injektor kann das Behandlungsfluid aufgesprüht werden. Dies führt dazu, dass das Behandlungsfluid wenigstens bereichsweise auf dem Formteil aufgebracht wird, ohne dass das Behandlungsfluid auf nicht erwünschte Bereiche tropft. Dies kann zwar auch durch eine geringere Menge an Behandlungsfluid erreicht werden, was dann aber wiederum zu einer nicht ausreichenden Pakettrennung führt oder eine vollständige Aktivierung des Klebstoffs nicht vollständig möglich ist. Des Weiteren hat das Aufbringen mit einem Öl-Injektor die technische Wirkung, dass kein Sprühnebel entsteht, der die Anlage verschmutzt.

In einer Ausführung wird das Stanzöl nicht mittels Rolle aufgetragen.

Es kann vorgesehen sein, dass das ausgewählte Formteil einseitig oder beidseitig mit dem Behandlungsfluid versehen wird. Wenn das Formteil beidseitig mit dem Behandlungsfluid beschichtet wird, ist das Formteil zu beiden Seiten von jeweils einem Stapelabschnitt trennbar und ist sodann ohne weitere Funktion als Ausschuss entfernbar.

Bevorzugt wird das Formteil vollflächig auf mit dem Behandlungsfluid beschichtet.

Das Behandlungsfluid umfasst ein Stanzöl, welches auf der Klebstoffbeschichtung aufgetragen wird. Das Stanzöl hat den Vorteil der günstigen Beschaffbarkeit sowie der zusätzlichen Eignung dadurch, dass Stanzöl ohnehin in dem Prozess unvermeidlich eingesetzt wird, so dass keine unerwünschten Reaktionen aufgrund der Verwendung einer andersartigen weiteren Substanz zu erwarten sind.

Bevorzugt ist das Stanzöl ein selbstverflüchtigendes Stanzöl.

Als Stanzöl kommt beispielsweise ein nichtwassermischbarer Kühlschmierstoff in Frage, insbesondere ein mittelviskoses Metallbearbeitungsöl für die spanlose Umformung.

Bevorzugt wird ein Öl frei von Chlor und Schwermetallen, wie z. B. Barium, eingesetzt, das für Tiefzieh-Operationen geeignet ist und durch sein Haft- und Netzvermögen einen homogenen Schmierfilm gewährleistet. Weiter bevorzugt weist das Öl eine Viskosität von 80 bis 110 mm²/s, bevorzugt 90 bis 100 mm²/s bei 40 °C auf, sowie einen Flammpunkt von > 150 °C, bevorzugt > 170 °C. Insbesondere enthält das Öl Phenol und isopropyliertes Phosphat, bevorzugt in einem Verhältnis von 3:1, und optional Triphenylphosphat in einem Anteil von 5 Gew.-%.

Beispielsweise kann ein Öl verwendet werden, wie es die Firma Castrol zum Anmeldezeitpunkt dieser Anmeldung unter dem Markennamen Iloform FST 16 verkauft.

Zusätzlich kann ein Leuchtmittel dem Behandlungsfluid zugesetzt werden, mit dem als Behandlung der Klebstoffbeschichtung die Klebstoffbeschichtung überbelichtet wird. Beispielsweise kann ein für die Aktivierung verwendetes Infrarotleuchtmittel zur Überbelichtung genutzt werden, indem bei einem hierfür ausgewählten Formteil kurzzeitig, beispielsweise durch eine Anlagensteuerung, die Leuchtleistung des Infrarotleuchtmittels hochgesetzt wird und/oder die Verweildauer des Formteils unter dem Infrarotleuchtmittel durch temporäre Verlangsamung oder temporären Stillstand des Transports der Formteile erhöht wird.

Zusätzlich kann in einer weiteren Ausführungsform mittels einer Befeuchtungseinheit als Behandlung der Klebstoffbeschichtung eine Kühlflüssigkeit auf die Klebstoffbeschichtung aufgebracht werden, beispielsweise flüssiger Stickstoff.

In Schritt F) werden die Formteile erfindungsgemäß abgelegt, bevorzugt werden sie außerdem, entweder nach jedem abgelegten Formteil oder nach einer bestimmten vorgegebenen Anzahl von mehreren abgelegten Formteilen oder nach Bildung des Formteilstapels mit einer axialen Kraft, das heißt einer senkrecht zur flachen Oberfläche weisenden Kraft, angedrückt, beispielsweise mittels eines Anpressstempels. Die axiale Kraft unterstützt die sich durch das Eigengewicht der Formteile ergebenden Kräfte, ist aber deutlich geringer als die während eines eventuellen Nachverdichtens angewandten Kräfte.

Besonders bevorzugt wird nach Abtrennen eines Stapelabschnitts der Stapelabschnitt in einer Presse nachverdichtet mit einem stirnseitigen, das heißt senkrecht zur Lamellenfläche, vorzugsweise über die Stirnseite konstanten, Druck zwischen 10000 N/(14000 mm²) und 200000 N/(10000 mm²), vorzugsweise zwischen 50000 N/(14000 mm²) und 150000 N/(10000 mm²), bei einer Temperatur des Formteilstapels zwischen 30 °C und 180 °C, bevorzugt zwischen 40 °C und 120 °C, besonders bevorzugt zwischen 50 °C und 100 °C. Die Verdichtung findet dadurch in einem zweistufigen Verfahren statt, wobei die erste Stufe das Bilden des Formteilstapels des Schritts F) oder das Bilden eines Stapelabschnitts des Formteilstapels des Schritts F) ist und die zweite Stufe das Nachverdichten. Es hat sich gezeigt, dass ein zweistufiges Verdichten eine signifikante Erhöhung der Haftung herbeiführt, nämlich etwa eine Verdopplung der bei Kopfzugprüfung aufzubringenden Kraft für ein Trennen eines Stapelabschnitts. Beispielhafte Messungen werden weiter unten beschrieben. Weitere nachgewiesene Vorteile sind eine verbesserte Wärmeabfuhr und eine um mehr als 5 Prozent erhöhte Scherfestigkeit des gesamten Verbunds.

Die genaue Abstimmung der Temperaturen und Drücke ist durch den Fachmann - unter Berücksichtigung der Taktzeit und ökonomischen Aspekte - vorzunehmen und kann auch abhängig sein vom Verhältnis Klebstoffdicke zu Blechdicke und die gewählte Konfiguration von den Aktivierungsmitteln aber auch insbesondere von den Anforderungen an das zu erstellende Bauteil.

Die Temperatur des Formteilstapels zwischen 30 °C und 180 °C, bevorzugt zwischen 40 °C und 120 °C, besonders bevorzugt zwischen 50 °C und 100 °C, wird bevorzugt dadurch erhalten, dass in der Positioniervorrichtung mittels eines Wärmeeintrag erzeugenden Leuchtmittels, gegebenenfalls angeordnet in oder neben dem Abtrennmittel und/oder mittels einer an der Positioniervorrichtung angeordneten Induktionsvorrichtung ein Erwärmen des Formteilstapels erfolgt und die aus dieser Erwärmung resultierende Restwärme im oben genannten Bereich beim Nachverdichten genutzt wird.

Der Verdichtungsschritt wird ausgeführt, indem in eine axiale Richtung des Blechpakets mit einem gleichmäßigen Flächendruck stirnseitig, das heißt in eine senkrecht zur Oberfläche der Lamelle weisenden Richtung, in eine axiale Richtung eine Komprimierung des Blechpakets durchgeführt wird. Durch die Komprimierung wird erreicht, dass der Haftverbund zwischen den einzelnen Formteilen besonders gut hergestellt wird und trägt damit zu der Langlebigkeit des Blechpakets bei. Der nachgelagerte Verdichtungsschritt findet bevorzugt außerhalb der Presse in einer nachgelagerten Verdichtungsstation statt.

In einer Weiterbildung kann das Verdichten mit Wegregelung anstatt einer Kraftregelung erfolgen. Dies wird beispielsweise durch einen adjustierbaren Anschlag realisiert. In Kombination mit einer sehr genauen Temperaturführung kann die axiale Länge der Bauteile dadurch sehr genau eingestellt werden.

Alternativ kann der Verdichtungsschritt aber auch durch, bevorzugt teil oder vollflächigen, Druck des Abtrennmittels erfolgen.

Besonders vorteilhaft ist die durch Verkleben und Nachverdichten erreichte sehr gute mechanische Festigkeit des Blechpakets, wodurch beispielsweise eine spanende Bearbeitung deutlich einfacher und genauer realisiert werden kann. Die mit der Drehzahl beziehungsweise Umfangsgeschwindigkeit steigenden Anforderungen können daher einfacher realisiert werden. Weiterer Vorteil ist ein hohes Maß an konstruktiven Freiheiten.

Aufgrund der gleichmäßigen Erwärmung des Einzelblechs (bzw. Sandwich) ist eine homogenere Erwärmung mit den einhergehenden Vorteilen z. B. bzgl. besserer geometrischer Eigenschaften, geringere innerer Spannungen, gegeben.

Besonders bevorzugt wird das Verfahren mit einem Blech durchgeführt, bei welchem die Klebstoffbeschichtung als wässrige Dispersion auf dem Blech aufgetragen wurde. Der Vorteil einer wässrigen Dispersion besteht darin, dass das Beschichtungssystem frei von organischen Lösungsmitteln ist (VOC-frei).

Des Weiteren besteht der Vorteil, dass das beschichtete Blech nahezu klebfrei auftrocknet, so dass ein Aufwickeln zum Coil ohne das Verkleben der einzelnen Windungen untereinander möglich ist. Eine anschließende chemische Vernetzung unter Druck und Temperatur ist weiterhin gegeben. Lösungsmittelhaltige gelöste Epoxidharz-Systeme sind für eine Klebfreitrocknung in der Regel nicht ausreichend hochmolekular mit dem Nachteil, dass die einzelnen Windungen im Coil sich, wenn überhaupt, nur noch schwer Abwickeln lassen, wodurch die Nutzung in einem Folgeprozess verhindert ist.

Eine Ausführungsform sieht daher in besonders bevorzugter Weise vor, dass die aufgetragene Klebstoffbeschichtung nicht in einem organischen Lösungsmittel gelöst vorlag.

Die Klebstoffbeschichtung besteht bevorzugt aus einem Klebstoff, der im Vergleich mit marktüblichen, dem Fachmann bekannten, Backlacksystemen eine signifikant höhere Viskosität, insbesondere signifikant höhere komplexe Viskosität unmittelbar vor dem Einsetzen der chemischen Vernetzung bei vergleichbaren Einbrennbedingungen besitzt, was durch weiter unten dargestellte Versuchsergebnisse illustriert ist. Dadurch ergibt sich der Vorteil, dass bei den Temperaturen, wie sie im Verlaufe des erfindungsgemäßen Verfahrens oder seiner Weiterbildungen erreicht werden, keine Verflüssigung des Klebstoffs erfolgt, sondern allenfalls der Klebstoff plastisch wird, also erweicht, so dass der Klebstoff vollständig innerhalb des Formteilstapels bleibt.

Besonders bevorzugt wird ein Klebstoff verwendet, der unmittelbar vor Einsetzen der chemischen Vernetzung eine komplexe Viskosität von 8 Pa x s oder höher, bevorzugt 10 Pa x s oder höher, aufweist. Ein Klebstoff, der die genannte komplexe Viskosität nicht unterschreitet, führt bei einem erfindungsgemäßen Verfahren oder seinen Weiterbildungen dazu, dass keine großflächige Verflüssigung des Klebstoffs stattfindet, sondern der Klebstoff bei den eingesetzten Temperaturen, insbesondere auch bei den eingesetzten Aktivierungstemperaturen, allenfalls pastös wird. Dies wiederum führt dazu, dass ein Blechpaket mit hervorragenden Eigenschaften, insbesondere einer hohen Maßhaltigkeit in der Geometrie, erhalten wird. Auch eignet sich ein solches Blechpaket in besonderer Weise für eine Ausführung eines Verfahrens mit einem Nachverdichtungsschritt, wodurch die hohe Maßhaltigkeit in der Geometrie zusätzlich begünstigt wird.

Der Klebstoff enthält bevorzugt 60 Gewichtsteile eines Epoxidharzes in Festharzform, 0,5 bis 15 Gewichtsteile eines latenten Härters und 1 bis 15 Gewichtsteile eines latenten Beschleunigers.

Bevorzugt weist der Klebstoff 1 bis 10 Gewichtsteile des latenten Härters, besonders bevorzugt mindestens 2, insbesondere mindestens 3 bis besonders bevorzugt maximal 8, insbesondere maximal 7 Gewichtsteile des latenten Härters auf.

Der Begriff des latenten Härters bezeichnet einen Stoff, welcher zur Härtung des Epoxidharzes dient, für das Härten jedoch aktiviert werden muss, insbesondere durch Zufuhr von chemischer und/oder thermischer Energie. Der latente Härter wird dem Klebstoff beispielsweise als in Pulverform vorliegender Feststoff zugegeben.

Der Begriff des latenten Beschleunigers bezeichnet einen Stoff, welcher die Härtung des Epoxidharzes durch den latenten Härter beschleunigt. Das Attribut latent bezieht sich auch im Zusammenhang mit dem Beschleuniger darauf, dass auch der Beschleuniger zur Erfüllung seiner Funktion zuvor durch chemische und/oder thermische Energie aktiviert werden muss. Der latente Beschleuniger wird dem Klebstoff beispielsweise als in Pulverform vorliegender Feststoff zugegeben.

Die oben angegebene Zusammensetzung bezieht sich auf die Mischung von den als Festkörper vorliegenden Komponenten in den angegebenen Gewichtsteilen zu einer Klebstoffmischung, welche in Dispersion und/oder Lösung mit einer geeigneten Flüssigkeit zu dem Klebstoff wird, der eine Klebstoffbeschichtung bilden kann. In verwendbarem Zustand, also in zur Beschichtung geeigneten Form, liegt der Klebstoff mit den angegebenen Komponenten bevorzugt als Dispersion der oben angegebenen Zusammensetzung in einem Dispersionsmedium, insbesondere als wässrige Dispersion, vor.

Dadurch, dass ein Blech mit einer Klebstoffbeschichtung aus einem thermisch aktivierbaren Klebstoff bereitgestellt wird, dient das mit dem Klebstoff beschichtete Blech als Vorprodukt für auf flexible Weise anpassbare Herstellverfahren von elektromagnetischen Komponenten, insbesondere Statorpaketen oder Rotorpaketen. Dadurch, dass der Klebstoff zunächst thermisch aktiviert werden muss, kann die Klebefunktion nach dem Ausnehmen von Lamellen aus dem Blech, beispielsweise durch Stanzen, zu einem gewünschten Zeitpunkt beziehungsweise zu einem gewünschten Verfahrensschritt vorgenommen werden. Innerhalb eines kurzen Zeitraums nach dem Aktivieren müssen die Lamellen nach dem Aktivieren (optional bevorzugt auch unter teil- oder vollflächigem Druck in der Presse und/oder in einem nachgeschalteten Verdichtungsprozess) zusammengeführt werden, damit diese während der chemischen Aushärtereaktion miteinander verklebt werden. Nur so können fehlerfreie, nicht delaminierte und geometrisch genaue, mechanisch stabile Pakete erzeugt werden.

Mit der beschriebenen Klebstoffzusammensetzung weist das Blech eine Oberfläche mit einer potenziell kurzen Aktivierungszeit von beispielsweise 0,05 bis 1 Sekunde, bevorzugt 0,3 bis 1 Sekunde, auf. Diese Eigenschaften gehen mit einer vergleichsweise hohen Temperaturbeständigkeit und einer vergleichsweise hohen Isolationsfähigkeit- und Alterungsbeständigkeit einher.

Das in dem beschriebenen Klebstoff vorhandene Epoxidharz umfasst eine oder mehrere Epoxidharzkomponenten mit mehr als einer Epoxidgruppe, von denen vorzugsweise mindestens ein Epoxidharz einen Erweichungspunkt größer 50 °C besitzt.

Bei den Epoxidharzen kann es sich sowohl um aliphatische, cycloaliphatische oder aromatische Epoxidharze handeln. Aliphatische Epoxidharze beinhalten Komponenten, die sowohl eine aliphatische Gruppe als auch mindestens zwei Epoxidharzgruppen tragen.

Beispiele für aliphatische Epoxidharze können sein Butandioldiglycidylether, Hexandioldiglycidylether, Dimethylpentandioxid, Butadiendioxid, Diethylenglycoldiglycidylether.

Cycloaliphatische Epoxidharze sind bspw. 3-Cyclohexenylmethyl-3-cyclohexylcarboxylatdiepoxid, 3,4-Epoxycyclohexylalkyl-3',4'-epoxycyclohexancarboxylat, 3,4-Epoxy-6-methylcyclohexylmethyl-3',4'-epoxy-o-methylcyclohexancarboxylat, Vinylcyclohexandioxid, Bis(3,4-Epoxycyclohexylmethyl)adipat, Dicyclopentadiendioxid, 1,2-Epoxy-6-(2,3-epoxypropoxy)hexahydro-4,7-methanoindan.

Aromatische Epoxidharze sind bspw. Bisphenol-A-Epoxidharze, Bisphenol-F-Epoxidharze, Phenol-Novolac-Epoxidharze, Cresol-Novolac-Epoxidharze, Biphenylepoxidharze, Biphenolepoxidharze, 4,4'-Biphenyl-Epoxidharze, Divinylbenzoldioxid, 2-Glycidylphenylglycidylether, Tetraglycidylmethylendianilin.

In einer bevorzugten Ausgestaltung ist das Epoxidharz Bisphenol A-Epoxidharz.

Als latenter Härter wird eine Substanz oder ein Gemisch von Substanzen verwendet, die vorzugsweise bei Temperaturen im Bereich von 80 °C bis 200 °C Härtungsreaktionen mit den Epoxidharzen des Klebstoffs eingehen.

Der Härter kann Dicyandiamide, Aziridinderivate, Triazinderivate, Imidazoline, Imidazole, o-Tolylbiguanid, cyclische Amidine, organische Hexafluoroantimonat- oder Hexafluorophosphat-Verbindungen oder BF3-Aminkomplexe enthalten. Die Verbindungen können einzeln oder in Kombination eingesetzt werden.

Beispiele sind 2-Methylimidazol, 2-Undecylimidazol, 2-Heptadecylimidazol, 1,2-Dimethylimidazol, 2-Ethyl-4-methylimidazol, 2-Phenylimidazol, 2-Phenyl-4-metylimidazol, 1-Benzyl-2-metylimidazol, 1-Benzyl-2-phenylimidazol, 1-Cyanoethyl-2-metylimidazol, 1-Cyanoethyl-2-undecylimidazol, 1-Cyanoethyl-2-ethyl-4-metylimidazol, 1-Cyanoethyl-2-phenylimidazol, 1-Cyanoethyl-2-undecylimidazoliumtrimellitat, 1-Cyanoethyl-2-phenylimidazolium-trimellitat, 2,4-Diamino-6-[2'-methylimidazolyl-(1')]-ethyl-s-triazin, 2,4-Diamino-6-[2'-undecylimidazolyl-(1')]-ethyl-s-triazin, 2,4-Diamino-6-f2'-ethyl-4'-methylimidazolyl-(1')]-ethyl-s-2,4-diamino-6-[2"methylimidazolyl-(1')]-ethyl-s-triazin, 2-Phenylimidazol, 2-Phenyl-4,5-dihydroxymetylimidazol, 2-Phenyl-4-methyl-5-hydroxymethylimidazol, 2,3-Dihydro-1H-pyrrolo[1,2-a]benzimidazol, (1-Dodecyl-2-methyl-3-benzyl)imidazoliumchlorid, 2-Methylimidazolin, 2-Phenylimidazolin, 2,4-Diamino-6-vinyl-1,3,5-triazin, 2,4-Diamino-6-vinyl-1,3,5-triazin Isocyansäure-Addukt, 2,4-Diamino-6-methacryloyloxyethyl-1,3,5-triazin, 2,4-Diamino-6-methacryloyloxyethyl-1,3,5-triazin Isocyansäure-Addukt, 1,3,5-Triazin, 2,4-Diamino-6-methyl-1,3,5-triazin, 2,4-Diamino-6-nonyl-1,3,5-triazin, 2,4-Diamino-6-phenyl-1,3,5-triazin, 2,4-Dimethoxy-6-methyl-1,3,5-triazin, 2,4-Dimethoxy-6-phenyl-1,3,5-triazin, 2-Amino-4,6-dimethyl-1,3,5-triazin, 2-Amino-4-dimethylamino-6-methyl-1,3,5-triazin, 2-Amino-4-ethoxy-6-methyl-1,3,5-triazin, 2-Amino-4-ethyl-6-methoxy-1,3,5-triazin, 2-Amino-4-methoxy-6-methyl-1,3,5-triazin, 2-Amino-4-methyl-6-phenyl-1,3,5-triazin, 2-Chloro-4,6-dimethoxy-1,3,5-triazin, 2-Ethylamino-4-methoxy-6-methyl-1,3,5-triazin, 1-o-Tolylbiguanid.

In einer bevorzugten Ausgestaltung enthält der Beschleuniger ein Harnstoffderivat und/oder ein Imidazol.

Die Klebstoffzusammensetzung kann darüber hinaus noch weitere Komponenten enthalten, beispielsweise ein Korrosionsschutzadditiv.

Bevorzugt ist, wenn der Härter ein Dicyandiamid, ein Imidazol, einen BF3-Aminkomplex oder eine Kombination derselben enthält.

Bevorzugt weist der Klebstoff 1 bis 10 Gewichtsteile des latenten Beschleunigers, besonders bevorzugt mindestens 2, insbesondere mindestens 3 bis besonders bevorzugt maximal 8, insbesondere maximal 4 Gewichtsteile des latenten Beschleunigers auf.

In einer anderen bevorzugten Ausführungsform ist vorgesehen, dass der Klebstoff weiterhin 0,2 bis 8 Gewichtsteile, bevorzugt 0,2 bis 5 Gewichtsteile, eines Farbstoffs aufweist. Hierdurch kann das optische Erscheinungsbild der Oberfläche gefälliger gestaltet werden. Der Farbstoff kann aus der Gruppe der Flammruße, der Eisenoxidschwarzpigmente, oder der wasserlöslichen Farbstoffe ausgewählt sein oder eine Mischung von mehreren der vorgenannten.

Bevorzugt enthält der Klebstoff eines oder mehrere der dem Fachmann bekannten Isolationsadditive, wobei der Begriff der Isolationsadditive sich auf speziell zur Erhöhung des elektrischen Widerstands des Klebstoffs bereitgestellte Additive bezieht. Die Isolationsadditive können in Mengen von 1 bis 10 Gewichtsteilen, bevorzugt 1 bis 5 Gewichtsteilen, in dem Kleber enthalten sein.

Bevorzugt enthält der Klebstoff eines oder mehrere der dem Fachmann bekannten Korrosionsschutzadditive. Die Korrosionsschutzadditive können in Mengen von 1 bis 10 Gewichtsteilen, bevorzugt 1 bis 5 Gewichtsteilen, in dem Kleber enthalten sein.

In einer Variante des Verfahrens enthält der latente Beschleuniger ein Harnstoffderivat.

Der im Klebstoff enthaltene latente Beschleuniger besteht vorzugsweise zu wenigstens 50 Gew.-%, noch bevorzugter wenigstens 90 Gew.-%, noch bevorzugter vollständig, aus Harnstoffderivat.

Als Harnstoffderivat wird bevorzugt ein N,N-Dimethylharnstoff oder ein N,N'-Dimethylharnstoff oder ein bifunktionelles Harnstoffderivat verwendet, besonders bevorzugt mit zwei Harnstoffgruppen als funktionelle Gruppen, im speziellen besonders bevorzugt ein 4,4'-Methylen-bis-(Phenyldimethylharnstoff), oder eine Mischung mehrerer der vorgenannten.

Der im Klebstoff enthaltene latente Beschleuniger besteht vorzugsweise zu wenigstens 50 Gew.-%, noch bevorzugter wenigstens 90 Gew.-%, noch bevorzugter zu wenigstens 98 Gew.-%, speziell bevorzugt vollständig, aus 4,4'-Methylen-bis-(Phenyldimethylharnstoff).

In einer Variante des Verfahrens wird als Harnstoffderivat auch oder ausschließlich ein unsymmetrisch substituierter Harnstoff verwendet.

In einer alternativen Weiterbildung des Verfahrens wird ein Harnstoffderivat eingesetzt, bei welchem mindestens eines, bevorzugt 2, besonders bevorzugt 3 Wasserstoffatome durch, voneinander unabhängig, Alkylgruppen und oder Phenylgruppen, die ihrerseits substituierter sein können, ersetzt sind. Bevorzugt handelt es sich bei den Alkylgruppen um Methyl, Ethyl, Propyl oder Butyl, bevorzugt Methyl; bei der Phenylgruppe handelt es sich um Phenyl oder um ein substituiertes Phenyl, bevorzugt in Position 4, ebenfalls bevorzugt als Substituent eines der oben genannten Alkyle. In einer weiteren Alternative wird im Sinne der Erfindung ein bifunktionelles Harnstoffderivat als ein oben beschriebenes Derivat bezeichnet, welches 2 funktionelle Gruppen aufweist. Funktionelle Gruppen sind Atomgruppen, welche die Stoffeigenschaften und insbesondere das Reaktionsverhalten der Verbindung maßgeblich bestimmen, insbesondere gehen die funktionellen Gruppen Reaktionen ein. Ferner ist das einzusetzende Harnstoffderivat halogenfrei. In einer Alternative weist das einzusetzende Harnstoffderivat 2 Harnstoffderivate als funktionelle Gruppen auf. Vorteilhaft können dadurch Epoxyharze ohne die Anwesenheit von Dicyanamiden als Vernetzer gehärtet werden.

Als Harnstoffderivat kann auch ein Stoff 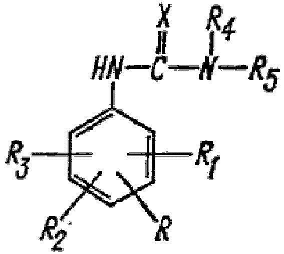 vorgesehen sein mit R: Wasserstoff oder eine Gruppe gemäß 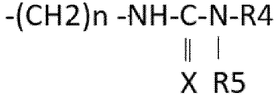 mit
n = 0 oder 1, bevorzugt 1,
X = O oder S, bevorzugt O,
R1, R2 und R3: jeweils Wasserstoff, ein Halogen, Nitro-Gruppe, eine substituierte oder nichtsubstituierte Alkylgruppe, Alkoxylgruppe, Arylgruppe oder Aryloxylgruppe;
R4: Alkylgruppe, Alkenylgruppe, Cycloalkylgruppe, Cycloalkenylgruppe, Aralkylgruppe optional substituiert durch ein Halogen, Hydroxyl oder Cyan, bevorzugt Methyl, Ethyl, Propyl, Butyl, besonders bevorzugt Methyl;
R5: wie R4 oder Alkoxylgruppe, R5 optional mit R4 einen heterocyklischen Ring bildend, oder ein N,N-Dimethyl-N'-(3,4-Dichlorophenyl)Harnstoff oder ein N,N-Dimethyl-N'-(3-chioro-4-methylphenyl)Harnstoff oder ein N,N-Dimethyl-N'-(3-chloro-4-methoxyphenyl)Harnstoff oder ein N,N-Dimethyl-N'(3-chloro-4-ethylphenyl)Harnstoff oder ein N,N-Dimethyl-N'-(4-methyl-3-nitrophenyl)Harnstoff oder ein N-(N'-3,4-dichlorophenylcarbamoyl)morpholine oder ein N,N-dimethyl-N'(3-chloro-4-methylphenyl)thio-Harnstoff;
bevorzugt ist das Harnstoffderivat 4,4'-Methylen-bis-(Phenyldimethylharnstoff);
oder eine Mischung aus zwei, drei oder mehreren der vorgenannten. Eine solche Mischung enthält bevorzugt mindestens 10%, 25%, bevorzugt 50%, 60%, 70%, 80% oder 90% 4,4'-Methylen-bis-(Phenyldimethylharnstoff).

Der Vorteil von Harnstoffderivaten der genannten Art ergibt sich aus der GB 1293142 A. Die Erfinder haben gefunden, dass derartige Derivate sich hervorragend für die Herstellung von elektromagnetischen Komponenten nutzen lassen.

Die mittlere Teilchengröße (arithmetisches Mittel) des Harnstoffderivats ist bevorzugt zwischen 1 µm und 30 µm.

In einer Alternative enthält der Klebstoff kein Hydrazin oder Hydrazin-Derivat.

Es kann vorgesehen sein, dass die Klebstoffbeschichtung auf dem Blech einseitig oder beidseitig aufgebracht ist. Wenn beidseitig eine Klebstoffbeschichtung aufgebracht ist, kann die Dicke der Beschichtung gleich sein, aber auch unterschiedliche Dicken können vorgesehen sein.

Als bevorzugte Dicke der Klebstoffbeschichtung, das bedeutet bei einseitigem Klebstoff die Dicke der Beschichtung auf der einen Seite beziehungsweise bei zweiseitiger Klebstoffbeschichtung die Gesamtdicke der Klebstoffbeschichtung auf beiden Seiten addiert, beträgt zwischen 1 µm und 20 µm, bevorzugt zwischen 2 µm und 10 µm. Besonders bevorzugt ist eine Gesamtdicke zwischen 4 µm und 8 µm.

Eine einseitig vorgenommene Klebstoffbeschichtung des Blechs geht mit einer apparativ einfacheren Herstellung einher, eine beidseitige Klebstoffbeschichtung des Blechs geht wiederum mit dem Vorteil einher, dass bei einer Aufeinanderpositionierung von einzelnen aus dem Blech hergestellten Lamellen Klebstoffoberfläche an Klebstoffoberfläche positioniert wird, wodurch eine verbesserte Haftung und dadurch eine höhere mechanische Stabilität der elektromagnetischen Komponente erreicht wird, was in Versuchen gezeigt wurde.

Besonders bevorzugt ist die erste Teilbeschichtung der ersten Blechoberfläche und die zweite Teilbeschichtung der zweiten Bleichoberfläche mit einer zweiten Dicke derart aneinander angepasst, dass die erste Dicke wenigstens das 1,5-fache, bevorzugt das 2-fache der zweiten Dicke beträgt. In einer derartigen Konfiguration ist die erste Dicke für eine hervorragende Isolation verantwortlich, so dass die Gefahr von Klebstofflücken nahezu verschwindend ist, während die dünnere der beiden, nämlich die mit der zweiten Dicke, aufgetragene zweite Teilbeschichtung im Wesentlichen der Herstellung der hervorragenden Haftung dient.

Ganz besonders bevorzugt ist eine beidseitige Beschichtung mit einer Gesamtdicke beider Beschichtungen zwischen 4 µm und 6 µm. Eine derart geringe Beschichtungsdicke ist mit den erfindungsgemäß oder gemäß Weiterbildungen der Erfindung durchgeführten Verfahren aufgrund ihrer hohen Reaktivität möglich, wie die hergestellten Beispiele belegen. Bekannte Backlack-Klebstoffe erfordern in der Regel höhere Beschichtungsdicken als 6 µm (z. B. Backlack beidseitig, je 5 µm pro Seite). Dies führt zu dem Vorteil, dass aus den erfindungsgemäß durchgeführten Versuchen mit den Blechen in einer der beschriebenen Arten insbesondere Statoren oder Rotoren hergestellt werden können, die einen signifikant höheren Eisenfüllfaktor aufweisen, als es mittels Backlack-Verfahren hergestellte Komponenten tun. Vorteil ist eine etwas höhere Effizienz der die Komponente aufweisenden elektrischen Maschine. Aber Klebstoffbeschichtungen zwischen insgesamt 1 µm und 20 µm, bevorzugt 2 µm und 8 µm, können vorgesehen sein.

In einer weiteren Alternative ist zwischen Blech und Klebstoffschicht eine Vorbehandlung, ein Haftvermittler, eine Phosphatierung und/oder ein Isolator, beispielsweise als Isolierlackschicht ausgebildet, angeordnet und/oder auf der Klebstoffschicht gegenüberliegenden Seite des Blechs nur Isolierlack angeordnet oder es sich um eine unbeschichtete Oberfläche handelt.

Besonders bevorzugt ist das Blech als nicht kornorientiertes Elektroband, auch als sogenanntes NO-Elektroband bezeichnet, ausgebildet oder aus einem solchem abgetrennt, wobei das nicht kornorientierte Elektroband neben Fe und unvermeidbaren Verunreinigungen folgende Elemente enthält (alle Angaben in Gew.-%):
0,1 bis 3,50 Si,
0,01 bis 1,60 Al,
0,07 bis 0,65 Mn,
optional bis zu 0,25 P.

Es versteht sich, dass die Gesamtheit aller Legierungsbestandteile und der Verunreinigungen sich zu 100 Gew.-% ergänzen.

Besonders bevorzugt werden die nachfolgenden Bedingungen eingehalten (alle Angaben in Gew.-%):
2,3 bis 3,40 Si,
0,3 bis 1,1 Al,
0,07 bis 0,250 Mn,
optional bis zu 0,030 P, Rest Fe und unvermeidbare Verunreinigungen.

Es versteht sich, dass die Gesamtheit aller Legierungsbestandteile und der Verunreinigungen sich zu 100 Gew.-% ergänzen.

Vorzugsweise weist das nicht kornorientierte Elektroband oder das nicht kornorientierte Blech eine Streckgrenze in Längsrichtung bei Standardnormalbedingungen von 190 bis 610 MPa und eine maximale Zugfestigkeit von 310 bis 740 MPa und eine Mindestbruchdehnung A80 von 6 bis 48 % gemessen in Anlehnung an DIN EN ISO 6892-1 sowie eine Härte Hv5 von 100 - 250 auf.

In einer besonders bevorzugten Ausführungsform weist der Werkstoff eine Streckgrenze in Längsrichtung bei Raumtemperatur von 310 bis 600 MPa und eine maximale Zugfestigkeit von 400 bis 640 MPa sowie eine Bruchdehnung A80 von 7 bis 32 % gemessen in Anlehnung an DIN EN ISO 6892-1 sowie eine Härte Hv5 von 130 - 250 auf.

Das Material weist bevorzugt eine Anisotropie bei P1,0; 400 Hz im Bereich von 5 bis 17 % auf.

Geeignet und bevorzugt verwendet werden Bleche genutzt, insbesondere Elektroband, mit einer Dicke zwischen 0,05 und 2,5 mm, wobei Dicken zwischen 0,1 und 1,0 mm bevorzugt werden. Besonders bevorzugt werden Dicken zwischen 0,15 und 0,4 mm eingesetzt.

Alternativ kann das Blech ein Mehrlagenverbund (Sandwich) aus einer Blechlage, beispielsweise aus einem der oben beschriebenen Elektrobänder, sein und aus einer oder mehreren weiteren Lagen bestehen, beispielsweise mit einer akustisch dämpfenden Funktionslage (z. B. bondal E). Des Weiteren kann das Blech auch ein- oder beidseitig mit einer akustisch dämpfenden Funktionslage (z. B. Halb-bondal E) beschichtet sein, so dass das beschriebene Klebstoffsystem direkt an die akustisch dämpfende Funktionslage (z. B. chemische Basis Acrylat) anbindet. Aus der Technik ist bekannt, dass Epoxidharzsysteme gute Verträglichkeit aufweisen.

Alternativ kann das Blech auf einer Seite eine akustisch dämpfende Funktionslage aufweisen und auf der gegenüberliegenden Blechseite eine einzusetzende Klebstoffschicht.

In einer vorteilhaften Weiterbildung werden die Schritte C) bis F) des erfindungsgemäßen Verfahrens mit einer Hubzahl von wenigstens 80/min, bevorzugt zwischen 120/min und 300/min, durchgeführt. Bei geringeren Anforderungen an die Klebstoffverbindung oder kleineren elektrischen Komponenten kann eine Hubzahl auch deutlich über 300/min realisiert werden.

Ein Gedanke der Erfindung betrifft ein Blechpaket oder ein Stapelabschnitt eines Blechpakets für eine elektrische Maschine, das mit einem Verfahren der eingangsbeschriebenen Art oder einer seiner Weiterbildungen hergestellt ist. Insbesondere ist das Blechpaket oder der Stapelabschnitt ausgebildet als Stator oder als Rotor.

Weiterhin umfasst die Erfindung eine elektrische Maschine, insbesondere einen Elektromotor, der einen Stator und/oder einen Rotor aufweist, der mit einem erfindungsgemäßen Verfahren oder einer seiner Weiterbildungen hergestellt wurde.

In einer Weiterbildung weist die elektrische Maschine einen Stator und einen Rotor auf, wobei der Stator teilweise oder vollständig ein Blechpaket ist, das mit dem erfindungsgemäßen Verfahren oder einer seiner Weiterbildungen hergestellt ist, und der Rotor teilweise oder vollständig ein mittels fachmännischen Stanzpaketierens hergestelltes Bauelement ist. Der hinsichtlich der elektromagnetischen Effizienz besonders anspruchsvolle Stator wird dadurch mit hervorragenden elektromagnetischen Eigenschaften bereitgestellt, während der hinsichtlich seiner elektromagnetischen Eigenschaften in vielen Anwendungen weniger anspruchsvolle Rotor mit dem herkömmlichen Stanzpaketieren hergestellt wird, das sehr kosteneffizient ist. Es wird folglich eine elektrische Maschine bereitgestellt, die einen guten Trade-Off aus guten elektromagnetischen Eigenschaften und kosteneffizienter Herstellung bietet.

Weitere Einzelheiten, Merkmale und Vorteile des Gegenstands der Erfindung ergeben sich aus der nachfolgenden Beschreibung im Zusammenhang mit den Zeichnungen, in denen beispielhaft Ausführungsbeispiele der Erfindung dargestellt sind.

Es versteht sich, dass die vorstehend genannten wie auch nachfolgend erläuterten Merkmale nicht nur in der jeweils angegebenen Kombination, sondern auch in anderen Kombinationen oder in Alleinstellung verwendbar sind.

### Beispiele:

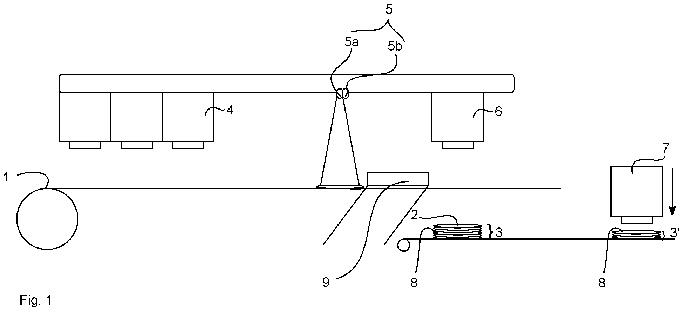

Ein Beispiel für eine erste Ausführung des Verfahrens zum Herstellen eines Blechpakets für einen Elektromotor ist in **Fig. 1** dargestellt. Es wird ein bereits mit einem Klebstoff beschichtetes Blech bereitgestellt, und zwar als nicht kornorientiertes Elektroband 1, beschichtet mit einem Klebstoff einer der erfindungsgemäß vorgesehenen Art. Dieses Band wird in eine Inline-Anlage hineintransportiert. In einer ersten Station sorgt eine Anzahl von als Stanzstempel ausgebildeten Schneidmitteln 4 für ein Schneiden von Formteilen 2, die als Rotorlamelle oder als Statorlamelle ausgebildet sind. In einer nachfolgenden Station wird das Formteil mittels eines als NIR-Emitter ausgebildeten Mittels zur Ausgabe von Infrarotstrahlung 5 beleuchtet, durch die dadurch herbeigeführte Erwärmung wird die Klebstoffbeschichtung des Formteils aktiviert. Das Aktivierungsmittel 5 weist ein erstes Infrarotleuchtmittel 5a und ein zweites Infrarotleuchtmittel 5b auf. Das Leuchtmittel 5a emittiert Strahlung der Wellenlängen 780 nm und 1200 nm, während das zweite Leuchtmittel Strahlung der Wellenlängen 1200 nm und 3000 nm emittiert. Durch das Bestrahlen mit verschiedenen Wellenlängen wird in senkrecht zur Blechoberfläche weisender Richtung eine gleichmäßigere Aktivierung der Klebstoffbeschichtung erreicht, wobei außerdem aufgrund der höheren Effizienz eine erhöhte Hubzahl erlaubt wird, da für das Aktivieren der Klebstoffbeschichtung eine geringere Zeitdauer benötigt wird.

In der Behandlungsvorrichtung 9 werden bestimmte Lamellen beschichtet, um im späteren Formteilstapel als Sollbruchstelle zwischen einzelnen Blechpaketen zu fungieren. Die Behandlungsvorrichtung besteht aus einem Öl-Injektor. Dieser Öl-Injektor sprüht das Behandlungsfluid, welches in dieser Ausführungsform aus Stanzöl besteht, auf die Oberfläche auf. In diesem Beispiel wurde das Öl vollflächig aufgebracht. Dabei beschichtet der Öl-injektor immer jeweils dann die Oberfläche eines Formteils, wenn jeweils eine vorgegebene erreichte Anzahl von Formteilen das Aktivieren der Klebstoffbeschichtung absolviert hat, um die Wirkung der Klebstoffbeschichtung herabzusetzen oder vollständig zu beseitigen. Das beschichtete Formteil weist sodann eine Sollbruchstelle auf, an welcher der Formteilstapel, bevorzugt im kontinuierlich laufenden Prozess, in Stapelabschnitte getrennt werden kann und jeder der Stapelabschnitte das fertiggestellte Blechpaket darstellt. Bei der Herstellung des Formteilstapels war die Lamelle 8 eine Lamelle, die einer vorgegebenen erreichten Anzahl von Formteilen entsprach. Aus diesem Grund wurde sie mit dem Öl-Injektor mit einem Stanzöl beschichtet und verfügt dadurch über eine verringerte Klebkraft.

Das Formteil wird anschließend mit dem als antihaftbeschichteten Ausschneidstempel ausgebildeten Abtrennmittel 6 ausgepresst und in einem Positionierbereich zu einem Stapel 3 positions- und/oder winkelausgerichtet gesammelt und vorfixiert, das heißt die mit aktivierter Klebstoffbeschichtung versehenen Lamellen haften bereits aufgrund ihres Eigengewichts aneinander.

Im Zustand der Entnahme ist das Blechpaket der an der Sollbruchstelle 8 entnommene Stapelabschnitt des Formteilstapels, der an der Lamelle 8 eine wirkverringerte Klebstoffbeschichtung aufweist. Die Stapelabschnitte können entweder durch Eigengewicht entnommen werden oder durch apparative oder manuelle Unterstützung von dem Formteilstapel getrennt werden. Im vorliegenden Beispiel liegen zwei separate Stapelabschnitte vor, die in einem nachfolgenden Schritt als Stapelabschnitt 3' in der Verdichterstation 7 nachverdichtet werden. Abschließend erfolgt in einer Verdichtungsstation ein Verdichten mit einem Verdichterstempel 7, bis der Klebstoff ausgehärtet ist und das fertige Blechpaket entnommen werden kann.

## Patentansprüche

1. Verfahren zum Herstellen eines Blechpakets für eine elektrische Maschine, wobei das Blechpaket bevorzugt entweder ein Stator-Paket oder ein Rotor-Paket ist, aufweisend die folgenden Schritte:
A) Bereitstellen eines mit einer zumindest teilweise aushärtbaren polymeren Klebstoffbeschichtung versehenen Blechs (1) oder mehrerer mit einer zumindest teilweise aushärtbaren polymeren Klebstoffbeschichtung versehener Bleche,
B) Transportieren des Blechs in eine Inline-Anlage, aufweisend: wenigstens ein Schneidmittel (4), ein Abtrennmittel (6) sowie ein, bevorzugt zwischen dem wenigstens einen Schneidmittel und dem Abtrennmittel angeordnetes, Aktivierungsmittel (5) zum Aktivieren der Klebstoffbeschichtung,
C) Schneiden eines, bevorzugt als Statorlamelle oder als Rotorlamelle ausgebildeten, Formteils (2) aus dem in Schritt A) bereitgestellten Blech mit dem wenigstens einen Schneidmittel (4),
D) Aktivieren der Klebstoffbeschichtung des Formteils (2), bevorzugt des in Schritt C) ausgebildeten Formteils (2), mittels des Aktivierungsmittels (5) zum Aktivieren der Klebstoffbeschichtung des Formteils,
E) Abtrennen des Formteils (2) von dem Blech mit dem Abtrennmittel (6),
F) Ablegen des Formteils (2) in einem Positionierbereich zur Bildung eines Formteilstapels,
G) Wiederholen der Schritte C) bis F) zum kontinuierlichen Füllen des Positionierbereichs mit Formteilen (8), wobei nach einer vorgegebenen erreichten Anzahl von Formteilen bei dem nachfolgenden Formteil vor Durchführen des Schritts F) mittels einer Behandlungsvorrichtung das nachfolgende Formteil wenigstens bereichsweise mit einem Behandlungsfluid versehen wird für eine Wirkverringerung der Klebstoffbeschichtung dieses nachfolgenden Formteils, so dass die Klebstoffbeschichtung dieses nachfolgenden Formteils in dem Positionierbereich infolge der wirkverringerten Klebstoffbeschichtung eine verbesserte Trennbarkeit eines Stapelabschnitts unterhalb der wirkverringerten Klebstoffbeschichtung von einem Stapelabschnitt oberhalb der wirkverringerten Klebstoffbeschichtung bewirkt, wobei das Behandlungsfluid ein Stanzöl umfasst, welches mit einem Öl-Injektor aufgebracht wird.

2. Verfahren nach Anspruch 1, wobei das Abtrennmittel in Schritt E ein Ausschneidstempel (6) mit einer Antihaftbeschichtung ist.

3. Verfahren nach einem der vorhergehenden Ansprüche, wobei das Aktivierungsmittel (5) ein erstes Infrarotleuchtmittel (5a) aufweist und die Klebstoffbeschichtung mit Infrarotstrahlung beleuchtet und dadurch aktiviert wird.

4. Verfahren nach Anspruch 3, wobei das Aktivierungsmittel (5) ein zweites Infrarotleuchtmittel (5b) aufweist, wobei das erste Infrarotleuchtmittel und das zweite Infrarotleuchtmittel Infrarotstrahlung unterschiedlicher Wellenlänge ausstrahlen zur Aktivierung der Klebstoffbeschichtung mit unterschiedlicher Aktivierungstiefe.

5. Verfahren nach Anspruch 4, wobei das erste Infrarotleuchtmittel (5a) eine Wellenlänge zwischen 780 nm und 1200 nm emittiert und das zweite Infrarotleuchtmittel (5b) eine Wellenlänge zwischen 1200 nm und 3000 nm emittiert.

6. Verfahren nach einem der vorhergehenden Ansprüche, wobei nach Abtrennen eines Stapelabschnitts der Stapelabschnitt in einer Presse nachverdichtet wird mit einem stirnseitigen, das heißt: senkrecht zu der Lamellenoberfläche, vorzugsweise über die Stirnseite gleichmäßig verteilten Druck 10000 N/(14000 mm²) und 200000 N/(10000 mm²), vorzugsweise zwischen 50000 N//(14000 mm²) und 150000 N/(10000 mm²), besonders bevorzugt bei einer Temperatur zwischen 30 °C und 180 °C, vorzugsweise bevorzugt zwischen 40 °C und 120 °C, noch bevorzugter zwischen 50 °C und 100 °C.

7. Verfahren nach einem der vorhergehenden Ansprüche, wobei die Klebstoffbeschichtung als wässrige Dispersion auf dem Blech aufgetragen ist und/oder die Klebstoffbeschichtung eine komplexe Viskosität aufweist, die wenigstens 8 Pa x s, bevorzugt 10 Pa x s, beträgt.

8. Verfahren nach einem der vorhergehenden Ansprüche, wobei die Klebstoffbeschichtung enthält:
60 Gewichtsteile eines Epoxidharzes in Festharzform,
0,5 bis 15 Gewichtsteile eines latenten Härters,
1 bis 15 Gewichtsteile eines latenten Beschleunigers.

9. Verfahren nach einem der vorhergehenden Ansprüche, wobei das in Schritt A) bereitgestellte Blech beidseitig mit der Klebstoffbeschichtung versehen ist.

10. Verfahren nach einem der vorhergehenden Ansprüche, wobei der latente Beschleuniger ein Harnstoffderivat enthält, insbesondere auch oder ausschließlich einen unsymmetrisch substituierten Harnstoff, **bevorzugt** ein N,N-Dimethylharnstoff oder ein N,N'-Dimethylharnstoff oder ein bifunktionelles Harnstoffderivat, besonders bevorzugt mit zwei Harnstoffgruppen als funktionelle Gruppen, im speziellen besonders bevorzugt ein 4,4'-Methylen-bis-(Phenyldimethylharnstoff), oder eine Mischung mehrerer der vorgenannten.

11. Verfahren nach Anspruch 10, wobei das Harnstoffderivat ein Stoff 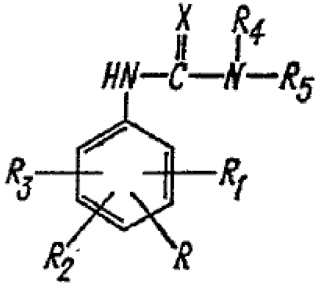 ist mit R: Wasserstoff oder eine Gruppe gemäß 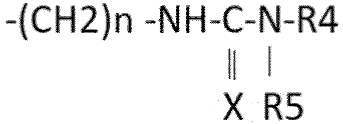 mit
n = 0 oder 1, bevorzugt 1,
X = O oder S, bevorzugt O,
R1, R2 und R3: jeweils Wasserstoff, ein Halogen, Nitro-Gruppe, eine substituierte oder nichtsubstituierte Alkylgruppe, Alkoxylgruppe, Arylgruppe oder Aryloxylgruppe,
R4: Alkylgruppe, Alkenylgruppe, Cycloalkylgruppe, Cycloalkenylgruppe, Aralkylgruppe optional substituiert durch ein Halogen, Hydroxyl oder Cyan, bevorzugt Methyl, Ethyl, Propyl, Butyl, besonders bevorzugt Methyl,
R5: wie R4 oder Alkoxylgruppe, R5 optional mit R4 einen heterocyklischen Ring bildend, oder ein N,N-Dimethyl-N'-(3,4-Dichlorophenyl)Harnstoff oder ein N,N-Dimethyl-N'-(3-chioro-4-methyl-phenyl)Harnstoff oder ein N,N-Dimethyl-N'-(3-chloro-4-methoxyphenyl)Harnstoff oder ein N,N-Dimethyl-N'(3-chloro-4-ethylphenyl)Harnstoff oder ein N,N-Dimethyl-N'-(4-methyl-3-nitrophenyl)Harnstoff oder ein N-(N'-3,4-dichlorophenylcarbamoyl)morpholine oder ein N, N-dimethyl-N'(3-chloro-4-methylphenyl)thio-Harnstoff,
bevorzugt ist das Harnstoffderivat 4,4'-Methylen-bis-(Phenyldimethylharnstoff);
oder eine Mischung aus zwei, drei oder mehreren der vorgenannten.

12. Verfahren nach einem der vorhergehenden Ansprüche, wobei die Schritte C) bis F) mit einer Hubzahl von wenigstens 80/min, bevorzugt zwischen 120/min und 300/min, durchgeführt wird.

13. Verfahren nach einem der vorhergehenden Ansprüche, wobei aus dem mittels Füllens des Positionierbereichs mit Formteilen gebildeten Formteilstapel durch wirkverringerte Klebstoffbeschichtung voneinander getrennte oder mit Sollbruchstelle versehene Stapelabschnitte separat entnommen werden.

14. Blechpaket für eine elektrische Maschine, hergestellt als Stapelabschnitt mit einem Verfahren nach Anspruch 13, insbesondere ausgebildet als Stator oder als Rotor.

15. Elektrische Maschine, insbesondere Elektromotor, aufweisend einen Stator und/oder einen Rotor nach Anspruch 14.
